# EUROPÄISCHE PATENTANMELDUNG

(11) **EP 0 941 708 A2**
(43) Veröffentlichungstag der Anmeldung: **15.09.1999**
(21) Anmeldenummer: 99100877.2
(22) Anmeldetag: 19.01.1999
(51) Int. Cl.: A61C 5/06, B05C 17/01

(54) **Manuell bedienbare Ejektoreinrichtung**

(30) Priorität: 13.03.1998 DE 19810950
(71) Anmelder: Heraeus Kulzer GmbH & Co.KG, 63450 Hanau (DE)
(72) Erfinder: Oppawsky, Steffen, 61350 Bad Homburg (DE); Schödel, Dieter Dr., 65193 Wiesbaden (DE)
(74) Vertreter: Kühn, Hans-Christian

(57) **Zusammenfassung**

Die Erfindung betrifft eine manuell bedienbare Ejektoreinrichtung zur Aufnahme einer Kartusche (19), die mit viskosem Material beladen ist, mit einer Führungshülse (1) mit einem vorderen, zur Aufnahme der Kartusche (19) geeigneten Ende und einem hinteren Ende, einem in der Führungshülse (1) zum Eingriff in die Kartusche (19) längs verschiebbar angeordneten Kolben (6), einem an dem hinteren Ende der Führungshülse (1) angeordneten Handgriff (3) und einem relativ zu der Führungshülse (1) und dem Handgriff (3) bewegbaren Hebel, der an dem Kolben (6) angreift, um diesen in dessen Längsrichtung in Richtung des vorderen Endes der Führungshülse (1) zu verschieben. Um die Sicherheit der Handhabung der Ejektoreinrichtung zu verbessern, weist der Kolben (6) ein Federgehäuse (7) und einen Stößel (9) auf, wobei das Federgehäuse (7) einen Hohlraum (8) aufweist, dessen eines Ende (10) geschlossen ist und dessen anderes, vorderes Ende eine Öffnung (11) aufweist, wobei der Übergang zwischen dem Hohlraum (8) und der Öffnung (11) von einer dem Hohlraum (8) zugewandten Anschlagfläche (14) begrenzt ist. Weiterhin weist der Stößel (9) einen durch die Öffnung (11) geführten Zylinder und an seinem hinteren Ende innerhalb des Hohlraumes (8) einen Stößelkopf (13) auf, der zumindest in einer Richtung quer zur Längsachse von Stößel (9) und Federgehäuse (7) einen größeren Durchmesser aufweist als die Öffnung (11). Dabei ist zwischen dem hinteren, dem Zylinder abgewandten Ende des Stößelkopfes (13) und dem geschlossenen Ende (10) des Hohlraumes (8) eine in ihrer zur Längsrichtung des Kolbens (6) parallelen Längsrichtung zusammendrückbare Federeinheit (16) angeordnet, wobei der Federweg der Federeinheit (16) mindestens ebenso groß ist wie der Weg, um den das Federgehäuse (7) in der Führungshülse (1) verschiebbar ist.

## Beschreibung

Die Erfindung betrifft eine manuell bedienbare Ejektoreinrichtung zur Aufnahme einer Kartusche, die mit viskosem Material beladen ist, mit einer Führungshülse mit einem vorderen, zur Aufnahme der Kartusche geeigneten Ende und einem hinteren Ende, einem in der Führungshülse zum Eingriff in die Kartusche längs verschiebbar angeordneten Kolben, einem an dem hinteren Ende der Führungshülse angeordneten Handgriff und einem relativ zu der Führungshülse und dem Handgriff bewegbaren Hebel, der an dem Kolben angreitt, um diesen in dessen Längsrichtung in Richtung des vorderen Endes der Führungshülse zu verschieben.

Derartige Ejektoreinrichtungen sind beispielsweise aus US-A-5,489,207 oder aus US-A-4,472,141 bekannt. Die in das vordere Ende der Führungshülse eingelegte Kartusche enthält ein viskoses Dentalmaterial, beispielsweise zum Füllen von Zahnkavitäten, das mittels des Kolbens der Ejektoreinrichtung ausgepreßt und in eine Zahnkavität hineingepreßt wird. Dazu greift der Kolben am hinteren Ende des in der Kartusche angeordneten und diese verschließenden Stopfens an, der bei Vorwärtsbewegung des Kolbens ebenfalls nach vorn gedrückt wird und dabei das viskose Material aus der am vorderen Ende der Kartusche angeordneten Auslaßspitze herauspreßt. Der Weg des Kolbens ist dabei begrenzt durch den begrenzten Vorschubweg des Stopfens der Kartusche. In solchen Fällen, in denen die Kartusche nicht optimal auf die Ejektoreinrichtung und den Vorschubweg des Kolbens der Ejektoreinrichtung abgestimmt ist oder in solchen Fällen, in denen das Material in der Kartusche eine zu hohe Viskosität aufweist oder mehr oder weniger vollständig ausgehärtet ist, wie dies bei polymerisierbaren Dentalmaterialien bei falscher Lagerung der Kartusche vorkommen kann, besteht die Gefahr, daß der Kolben der Ejektoreinrichtung bei zu hoher durch den Zahnarzt ausgeübter Druckkraft einen solchen Druck auf den Stopfen der Kartusche ausübt, daß diese im Extremfall zerstört wird. Bei einer derartigen Zerstörung können Teile der Kartusche unter hohem Druck in den Rachen des Patienten geschleudert werden und dort zu erheblichen Verletzungen führen.

Aufgabe der vorliegenden Erfindung ist es, die aus dem bekannten Stand der Technik bekannten Nachteile zumindest teilweise zu beseitigen und die Sicherheit der Handhabung der Ejektoreinrichtung zu verbessern.

Die Aufgabe wird für eine gattungsgemäße Ejektoreinrichtung dadurch gelöst, daß der Kolben ein Federgehäuse und einen Stößel aufweist, wobei das Federgehäuse einen Hohlraum aufweist, dessen eines Ende geschlossen ist und dessen anderes, vorderes Ende eine Öffnung aufweist, wobei der Übergang zwischen dem Hohlraum und der Öffnung von einer dem Hohlraum zugewandten Anschlagfläche begrenzt ist, daß der Stößel einen durch die Öffnung geführten Zylinder und an seinem hinteren Ende innerhalb des Hohlraumes einen Stößelkopf aufweist, der zumindest in einer Richtung quer zur Längsachse von Stößel und Federgehäuse einen größeren Durchmesser aufweist als die Öffnung und daß zwischen dem hinteren, dem Zylinder abgewandten Ende des Stößelkopfes und dem geschlossenen Ende des Hohlraumes eine in ihrer zur Längsrichtung des Kolbens parallelen Längsrichtung zusammendrückbare Federeinheit angeordnet ist, wobei der Federweg der Federeinheit mindestens ebenso groß ist wie der Weg, um den das Federgehäuse in der Führungshülse verschiebbar ist.

Dabei muß die Federkonstante so gewählt sein, daß die Feder bei normalem, gebrauchsmäßigem Zustand des viskosen Materials nicht oder nur unwesentlich zusammengedrückt wird. Die zulässige Maximalkraft, die auf den Stopfen der Kartusche oder auf die Hebeleinrichtung wirken darf, um eine Zerstörung von Kartusche oder Ejektoreinrichtung zu verhindern, läßt sich für die jeweiligen Anwendungsfälle leicht ermitteln. Die Federeinheit sollte eine Vorspannung aufweisen. Beispielsweise bei Ejektoreinrichtungen für Zahnfüllmaterial enthaltende Dentalkartuschen sollte diese Vorspannung etwa 400 - 500 N, vorzugsweise etwa 430 N, betragen. Durch eine derartige Anordnung wird gesichert, daß in solchen Fällen, in denen beispielsweise der Kolben für eine nicht optimal an die Ejektoreinrichtung angepaßte Kartusche zu lang ist oder bei denen das in der Kartusche befindliche Material ausgehärtet ist, die Spitze der Kartusche durch zu hohen Druck auf den Kolben abgerissen oder die Hebeleinrichtung der Ejektoreinrichtung zerstört wird. Oberhalb der Vorspannung drückt sich nämlich die Feder zusammen. Bei vorsugsweiser Verwendung einer Schraubentellerteder oder einer Tellerfeder, die insbesondere aus Spannscheiben gebildet sein kann, geschieht dieses Zusammendrücken kontinuierlich. Der Hebel, der in der vordersten möglichen Position des Kolbens zunächst nicht weiterbewegt werden kann, kann bei Überschreiten der Vorspannungskraft wieder um einen begrenzten Weg, den Federweg, bewegt werden, da er nach Überwindung der Vorspannungskraft bei Zusammendrücken der Feder das Federgehäuse nach vorn drückt, ohne den Stößel dabei zu bewegen. Diese Änderung ist für den Zahnarzt spürbar, da er den Hebel bewegen kann, ohne daß Material aus der Kartusche gepreßt wird, so daß ihm signalisiert wird, einen weiteren Druck auf den Hebel der Ejektoreinrichtung zu unterlassen. Da der Federweg gleich oder größer ist als der Weg, um den das Federgehäuse mittels des Hebels bewegt werden kann, bis der Hebel seine Anschlagposition erreicht, ist eine Zerstörung der Kartusche mittels des Stößels unmöglich. Die Federeinheit weist zweckmäßigerweise einen Federweg von etwa 8 bis 15 mm, vorzugsweise von etwa 10 bis 12 mm, je nach Länge der einzusetzenden Kartusche, auf.

Zweckmäßig ist es, daß an dem hinteren, dem Zylinder abgewandten Ende des Stößels eine Führungsstange axialsymmetrisch zur Achse des Stößels angeordnet ist, an deren Umfang die Federeinheit geführt wird. Desweiteren ist es vorteilhaft, daß in dem hinteren, geschlossenen Ende des Federgehäuses eine axialsymmetrische Bohrung angeordnet ist, deren Durchmesser größer ist als der Durchmesser der Führungsstange und deren Länge mindestens ebenso groß ist wie der Federweg der Federeinheit, so daß die Führungsstange bei Zusammenschieben der Feder in diese Bohrung hineingleitet und das Federgehäuse in seiner Bewegung relativ zu dem Stößel nicht behindert wird. Weiterhin ist es beispielsweise für Montagezwecke vorteilhaft, daß in dem geschlossenen Ende des Federgehäuses eine Spannhülse senkrecht zur Längsausdehnung des Federgehäuses angeordnet ist.

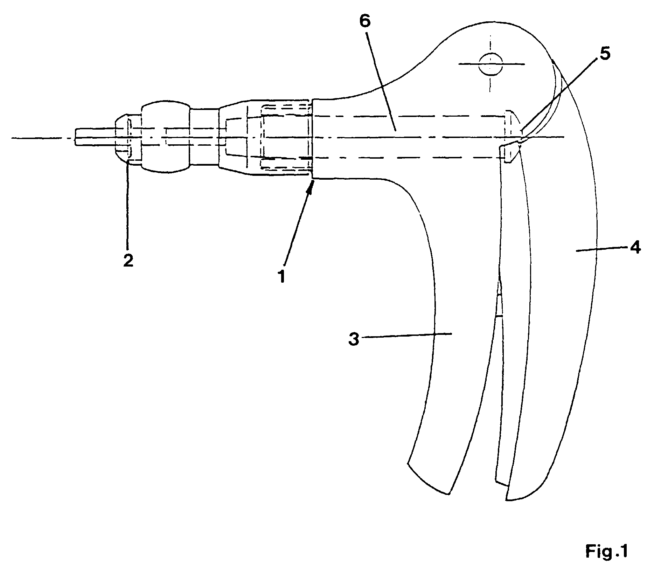

Nachfolgend wird ein Ausführungsbeispiel der Erfindung anhand einer Zeichnung näher erläutert. In der Zeichnung zeigt
- Figur 1: die schematische Darstellung einer Ejektoreinrichtung
- Figur 2: den Querschnitt durch den Kolben der Ejektoreinrichtung und
- Figur 3: den Querschnitt durch das Vorderteil der Ejektoreinrichtung mit in die Kartusche eingreifendem Stößel.

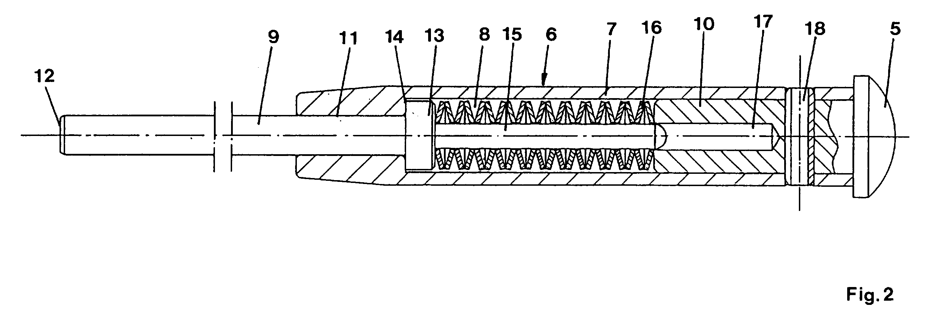

In der Zeichnung ist eine Ejektoreinrichtung dargestellt, die zur Aufnahme von Dentalmaterial enthaltenden Kartuschen und zur Verwendung durch den Zahnarzt geeignet ist. Die Ejektoreinrichtung weist eine Führungshülse 1 auf, an deren vorderem Ende eine Aufnahme 2 für eine Kartusche und an deren hinterem Ende ein Handgriff 3 angeordnet ist. An dem Handgriff 3 ist ein relativ zur Führungshülse 1 und zum Handgriff 3 bewegbarer Hebel 4 angeordnet, der gegen das rückwärtige Ende 5 eines Kolbens 6 drückt. Durch diesen Druck wird der Kolben 6 nach vorn in die Kartusche hineingeschoben, so daß das Dentalmaterial aus der Kartusche heraus, beispielsweise in eine Zahnkavität hinein, gepreßt wird. Der Kolben 6 ist so aufgebaut, daß auch bei höherem Druck auf den Hebel 4 durch den Zahnarzt weder die Kartusche noch die Ejektoreinrichtung selbst zerstört werden kann. Der Aufbau des Kolbens 6 ist in Figur 2 dargestellt. Der Kolben 6 weist ein Federgehäuse 7 mit einem Hohlraum 8 sowie einen Stößel 9 auf. Der Hohlraum 8 des Federgehäuses 7 ist an seinem hinteren Ende 10 geschlossen und weist an seinem vorderen Ende eine Öffnung 11 auf, durch die der Zylinder des Stößels 9 hindurchgeführt ist. Der Stößel endet an seinem vorderen Ende mit einem Anschlag 12 für den Eingriff in die Kartusche und weist an seinem hinteren Ende innerhalb des Hohlraumes 8 einen Stößelkopf 13 mit einem größeren Durchmesser als dem Durchmesser der Öffnung 11 auf, so daß der Stößel 9 in seiner vorderen Position mit dem Stößelkopf 13 an einer den Übergang zwischen dem Hohlraum 8 und der Öffnung 11 bildenden Anschlagfläche 14 zur Anlage kommt. An dem hinteren, der Öffnung 11 abgewandten Ende des Stößelkopfes 13 ist an diesem axialsymmetrisch zur Achse des Stößels 9 eine Führungsstange 15 angeordnet, die der Führung der in dem Hohlraum 8 angeordneten Federeinheit 16 dient. Die Federeinheit 16 ist als Tellerteder ausgebildet. Sie ist mit einer Vorspannung von etwa 430 N versehen und weist einen Federweg von etwa 11 mm auf. An dem hinteren, dem Zylinder des Stößels 9 abgewandten Ende 10 des Hohlraumes 8 des Federgehäuses 7 ist eine axialsymmetrische Bohrung 17 angeordnet, deren Durchmesser größer ist als der Durchmesser der Führungsstange 15 und deren Länge mindestens ebenso groß ist wie der Federweg der Federeinheit 16. An dem hinteren Ende 10 des Federgehäuses 7 ist, kurz vor dem abgerundeten rückwärtigen Ende 5 eine Spannhülse 18 angeordnet, die die Montage des Kolbens 6 erleichtert.

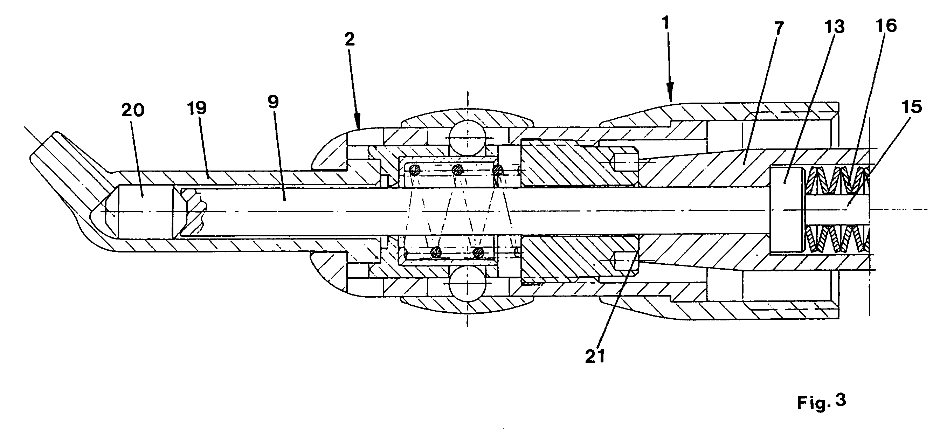

Figur 3 zeigt das vordere Ende der Ejektoreinrichtung mit eingelegter Kartusche 19, wobei der Stößel 9 des Kolbens in seiner vorderen Position angeordnet ist. Der in der Kartusche angeordnete Stopfen 20 hat dabei das in der Kartusche 19 befindliche Dentalmaterial nahezu vollständig aus dieser herausgepreßt. Bei ordnungsgemäßer Anpassung von Ejektoreinrichtung und Kartusche 19 befindet sich hier der Stößel 9 in seiner vorderen möglichen Stellung. Das Federgehäuse 7 des Kolbens 6 befindet sich ebenfalls in seiner vorderen Stellung und liegt an einem Begrenzungsanschlag 21 innerhalb der Führungshülse 1 an.

## Patentansprüche

1. Manuell bedienbare Ejektoreinrichtung zur Aufnahme einer Kartusche, die mit viskosem Material beladen ist, mit einer Führungshülse mit einem vorderen, zur Aufnahme der Kartusche geeigneten Ende und einem hinteren Ende, einem in der Führungshülse zum Eingriff in die Kartusche längs verschiebbar angeordneten Kolben, einem an dem hinteren Ende der Führungshülse angeordneten Handgriff und einem relativ zu der Führungshülse und dem Handgriff bewegbaren Hebel, der an dem Kolben angreift, um diesen in dessen Längsrichtung in Richtung des vorderen Endes der Führungshülse zu verschieben, dadurch gekennzeichnet, daß der Kolben (6) ein Federgehäuse (7) und einen Stößel (9) aufweist, wobei das Federgehäuse (7) einen Hohlraum (8) aufweist, dessen eines Ende (10) geschlossen ist und dessen anderes, vorderes Ende eine Öffnung (11) aufweist, wobei der Übergang zwischen dem Hohlraum (8) und der Öffnung (11) von einer dem Hohlraum (8) zugewandten Anschlagfläche (14) begrenzt ist, daß der Stößel (9) einen durch die Öffnung (11) geführten Zylinder und an seinem hinteren Ende innerhalb des Hohlraumes (8) einen Stößelkopf (13) aufweist, der zumindest in einer Richtung quer zur Längsachse von Stößel (9) und Federgehäuse (7) einen größeren Durchmesser aufweist als die Öffnung (11) und daß zwischen dem hinteren, dem Zylinder abgewandten Ende des Stößelkopfes (13) und dem geschlossenen Ende (10) des Hohlraumes (8) eine in ihrer zur Längsrichtung des Kolbens (6) parallelen Längsrichtung zusammendrückbare Federeinheit (16) angeordnet ist, wobei der Federweg der Federeinheit (16) mindestens ebenso groß ist wie der Weg, um den das Federgehäuse (7) in der Führungshülse (1) verschiebbar ist.

2. Manuell bedienbare Ejektoreinrichtung nach Anspruch 1, dadurch gekennzeichnet, daß die Federeinheit (16) als Tellerfeder oder als Schraubentellerfeder ausgebildet ist.

3. Manuell bedienbare Ejektoreinrichtung nach Anspruch 2, dadurch gekennzeichnet, daß die Tellerfeder aus Spannscheiben gebildet ist.

4. Manuell bedienbare Ejektoreinrichtung nach einem der Ansprüche 1 bis 3, dadurch gekennzeichnet, daß an dem hinteren, dem Zylinder abgewandten Ende des Stößels (9) eine Führungsstange (15) axialsymmetrisch zur Achse des Stößels (9) angeordnet ist und daß die Federeinheit (16) am Umfang der Führungsstange (15) geführt ist.

5. Manuell bedienbare Ejektoreinrichtung nach Anspruch 4, dadurch gekennzeichnet, daß in dem hinteren, geschlossenen Ende des Federgehäuses (7) eine axialsymmetrische Bohrung (17) angeordnet ist, deren Durchmesser größer ist als der Durchmesser der Führungsstange (15) und deren Länge mindestens ebenso groß ist wie der Federweg der Federeinheit (16).

6. Manuell bedienbare Ejektoreinrichtung nach einem der Ansprüche 1 bis 5, dadurch gekennzeichnet, daß die Federeinheit (16) einen Federweg von etwa 8 bis 15 mm aufweist.

7. Manuell bedienbare Ejektoreinrichtung nach Anspruch 6, dadurch gekennzeichnet, daß die Federeinheit (16) einen Federweg von etwa 10 bis 12 mm aufweist.

8. Manuell bedienbare Ejektoreinrichtung nach einem der Ansprüche 1 bis 7, dadurch gekennzeichnet, daß die Federeinheit (16) mit einer Vorspannung beaufschlagt ist.

9. Manuell bedienbare Ejektoreinrichtung nach Anspruch 8, dadurch gekennzeichnet, daß die Federeinheit (16) mit einer Vorspannung von etwa 400 - 500 N beaufschlagt ist.

10. Manuell bedienbare Ejektoreinrichtung nach einem der Ansprüche 1 bis 9, dadurch gekennzeichnet, daß in dem geschlossenen Ende (10) des Federgehäuses (7) eine Spannhülse (18) senkrecht zur Längsausdehnung des Federgehäuses (7) angeordnet ist.
